# EUROPEAN PATENT SPECIFICATION

(11) **EP 3 584 032 B1**
(45) Date of publication and mention of the grant of the patent: **01.12.2021**
(21) Application number: 19173772.5
(22) Date of filing: 10.05.2019
(51) Int. Cl.: B23Q 1/01, B23Q 1/66, B23Q 1/03

(54) **WORKING CENTER FOR WOODEN WORKPIECES PROVIDED WITH AN INTERCHANGEABLE WORKING PLANE**
BEARBEITUNGSSTATION FÜR WERKSTÜCKE AUS HOLZ MIT EINER AUSTAUSCHBAREN ARBEITSFLÄCHE
CENTRE DE TRAVAIL POUR PIÈCES EN BOIS AVEC UN PLAN DE TRAVAIL INTERCHANGEABLE

(30) Priority: 20.06.2018 IT 201800006475
(43) Date of publication of application: 25.12.2019
(73) Proprietor: SCM Group S.p.A., 47921 Rimini (RN) (IT)
(72) Inventor: MAZZA, Michele, 47921 RIMINI (IT); BAGGIARINI, Elia, 47921 RIMINI (IT); DI NAPOLI, Bruno, 47921 RIMINI (IT)
(74) Representative: Tiburzi, Andrea

(56) References cited:
- WO-A1-2007/042905
- DE-A1-102010 024 348
- DE-U1-202004 020 954
- US-A1- 2013 078 047

## Description

This invention concerns a working center for workpieces made of wood, ceramic, plastic, metal, glass, fiberglass and the like, having an interchangeable working plane.

More in detail, the invention concerns a machining center of the type above, designed and manufactured in particular to adapt a worktop to different types of machining operations that require the use of bar working plane and multifunction working plane for machining wooden pieces, but which can be used for any workpiece, for which different machining operations are required to be carried out in the same working center.

In the following the description will be directed to a working center for wooden workpieces, but it is clear that it should not be considered limited to this specific use.

As is well known, there are currently working centers for wooden workpieces equipped with a work plane comprising a base, as a support on the ground, and a plurality of support bars for the pieces to be machined, which are usually coupled with the base in a removable or movable way.

The support surface equipped with bars is used for a type of machining wherein it is necessary to have a free space below the support base of the workpiece, so as to allow the tools of the working center to pass the workpiece itself during machining.

There are also working centers equipped with a base, to which a multifunction working plane is coupled.

A multifunction working plane is a continuous table for non-through machining operations with respect to a vertical direction, i.e. orthogonal to the table itself, equipped with means for fixing the workpiece, generally a vacuum system, delimited in specific areas of the table by means of seals positioned manually by an operator.

Therefore, in order to carry out different machining operations on workpieces, it is necessary to use working centers with the most suitable type of working plane for the machining operation to be carried out on the workpiece.

The relevant prior art includes also the patent utility model DE-U-202004020954. This citation discloses a working center comprising a base for standing on the ground, a first working plane coupled to said base for supporting workpieces, and a working unit movable along said base. The working center includes a second working plane which can be positioned in a working position over the first working plane. Moving means is provided for moving the working planes from a rest position to the working position. Supporting means are coupled to the base for supporting the working planes.

In light of the above, it is therefore object of present invention to provide a machining center equipped with a working plane interchangeable between a working plane, equipped with support bars and a working plane equipped with a multifunction support table.

Another object of the invention is that of equipping the working table of a working center automatically for the different machining operations to be carried out on the workpieces to be machined.

Another object of this invention is that of providing a working center equipped with an interchangeable working table with small overall dimensions.

These and other results are obtained according to the invention with a working center equipped with an interchangeable table.

It is therefore object of the present invention a working center, for workpieces made in wood, ceramic, plastic, metal, glass, fiberglass and the like, comprising: a base for standing on the ground; a working plane coupled to said base comprising a plurality of supporting bars, for supporting said workpieces; a working unit movable along said base; said working center being characterized in that it comprises: at least one multifunction plane module which can be positioned in a working position over said plurality of supporting bars; moving means for moving said at least one multifunction plane module from a rest position to said working position; supporting means, coupled to said base, for supporting said at least one multifunction plane module for working said workpieces.

Further according to the invention, said supporting means form a substantially flat supporting surface to support said at least one multifunction plane module.

Still according to the invention, said working center comprises a magazine for housing said at least one multifunction plane module in said rest position.

Preferably according to the invention, said magazine is arranged in correspondence of one end of said base, and in that it may comprise a plurality of multifunction plane module arranged in said magazine.

Further according to the invention, said magazine is arranged in correspondence of one end of said base, or it is arranged adjacent to said base on the ground, or it is arranged suspended by said moving means.

Still according to the invention, said moving means pick up said at least one multifunction plane module from said rest position to put it on said supporting means, so as to form a continuous multifunction working plane.

Preferably according to the invention, said supporting means comprise at least one first and one second elongated tubular element, each being hinged in rotation to said base and movable from a rest position to a working position.

Further according to the invention, each of said at least one first and one second elongated tubular element is provided respectively with a first plurality of supporting elements and a second plurality of supporting elements.

Still according to the invention, said supporting means comprise respectively a first plurality and a second plurality of supporting means fixed to said base.

Preferably according to the invention, said first plurality of supporting means forms a line parallel to that formed by said second plurality of supporting means, and each supporting means of said first plurality of supporting means faces the respective supporting means of said second plurality of supporting means, so as to form a couple of supporting means.

Further according to the invention, said at least one module of multifunction plane module is provided with at least one element capable to be arranged on said supporting means.

Still according to the invention, said at least one multifunction plane module is provided with at least one elongated pedestal capable to be arranged on said supporting means.

Preferably according to the invention, said at least one multifunction plane module is provided, on the lower surface, with a first couple and a second couple of pedestals movable from a rest position to a working position.

Further according to the invention, said supporting means are a first guide and a second guide coupled to said base, suitable for the sliding of said plurality of supporting bars along said base.

Still according to the invention, said moving means are integrated in said working unit.

Preferably according to the invention, said moving means comprise a fixed portion for resting on the ground of said moving means, and a movable portion, hinged in rotation to said fixed portion.

Further according to the invention, said movable portion is telescopic and it is provided with gripping members for picking up and moving said at least one multifunction plane module.

Still according to the invention, said movable portion moves from a rest position, in which it is retracted inside said fixed portion, to a position of maximum extension in which it is arranged according to a vertical direction with respect to the ground, to receive said at least one multifunction plane module, to a working position in which it is arranged according to a direction parallel to said base to put said at least one multifunction plane module on said supporting means.

Finally according to the invention, said moving means are an anthropomorphic robot or a Cartesian robot or a polar robot or a SCARA robot - Selective Compliance Assembly Robot Arm.

The present invention will be now described, for illustrative but not limitative purposes, according to its preferred embodiments, with particular reference to the figures of the enclosed drawings, wherein:
Figure 1 shows a side perspective view of the working center of wooden pieces equipped with an interchangeable working plane, object of the present invention;
Figure 2 shows a top view of the working center of Figure 1;
Figure 3 shows a lateral perspective view of the base and the working plane of a first embodiment of the working center object of the present invention;
Figure 4 shows a top view of the working plane shown in Figure 3;
Figure 5 shows a further side perspective view of the working center of Figure 3;
Figure 6 shows a further side perspective view of the working center of Figure 3, in which the multifunction plane can be seen;
Figure 7 shows a front view of the base and working plane of the working center shown in Figure 3;
Figure 8 shows a lateral perspective view of a detail of the base of the machining center shown in Figure 3;
Figure 9 shows a top view of the base shown in Figure 8;
Figure 10 shows a further top view of the base shown in Figure 8;
Figure 11 shows a front perspective view of the base and the working plane of a second embodiment of the working center object of the present invention;
Figure 12 shows a side view of the base and the working plane shown in Figure 11;
Figure 13 shows a further front perspective view of the base and the working plane shown in Figure 11;
Figure 14 shows a side perspective view of a third embodiment of the working center object of the present invention;
Figure 15 shows a bottom view of the multifunction plane of the third embodiment of the working center object of the present invention;
Figure 16 shows a further bottom view of the multifunction plane shown in Figure 15;
Figure 17 shows a top view of a fourth embodiment of the working center object of the present invention;
Figure 18 shows a lateral perspective view of the working center shown in Figure 17;
Figure 19 shows a lateral perspective view of a component, in an operating position, of the working center shown in Figure 17;
Figure 20 shows a lateral view of the component shown of Figure 17;
Figure 21 shows a frontal view of the component shown in Figure 17, in a further working position;
Figure 22 shows a further side perspective view of the component shown in Figure 17, in a resting position; and
Figure 23 shows a further side perspective view of the working center shown in Figure 17.

In the various figures, similar parts will be indicated by the same reference numbers.

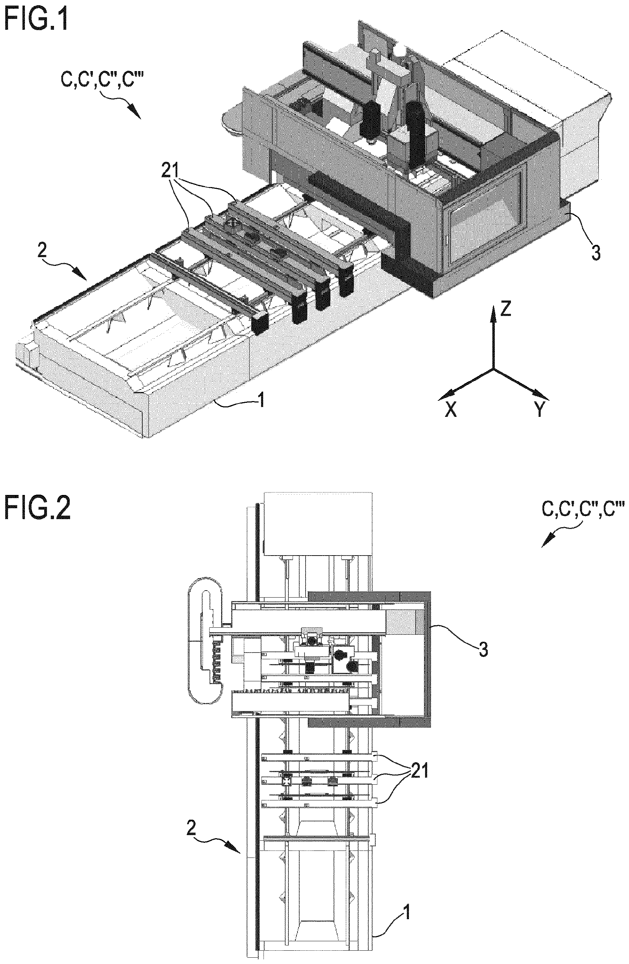

Referring to figures 1 and 2, the working center C, C', C", C" of workpieces made of wood, ceramic, plastic, glass, fiberglass and the like, provided with an interchangeable working plane, object of the present invention essentially comprises a base 1, by which said machining center C, C', C", C'" is on the ground, a working plane 2, for supporting the workpieces to be machined, and a machining unit 3, provided with tools for machining the workpieces.

Said base 1 has an elongated shape, whose main dimension is mainly extended according to a development direction parallel to the axis indicated with X.

Said working plane 2 is coupled with said base 1 and also has an elongated shape, whose main dimension extends mainly according to a direction of development parallel to the X axis.

Said working plane 2 comprises a plurality of support bars 21 that are coupled with said base 2 by means of a first 23 and a second 23' guide.

Each bar of said plurality of bars 21 is aligned in a direction parallel to an axis orthogonal to the X axis, indicated with Y.

Said plurality of support bars 21 is adapted for supporting and blocking workpieces by means of vacuum systems, while machining by said working unit 3.

Said working unit 3 comprises working tools, not shown in the figure, for machining workpieces resting on said working plane 2.

Said working unit 3 includes a working head that supports and activates relevant working tools and is covered by a protective carter.

Said working unit 3 is slidingly coupled with said base 1 so as to slide along the X axis.

Said machining center C is equipped with at least one multifunction plane module 22, which is used for non-through machining, as described above, to be carried out on the workpieces.

Said at least one multifunction plane module 22 is arranged above said plurality of support bars 21, as will be described in detail below.

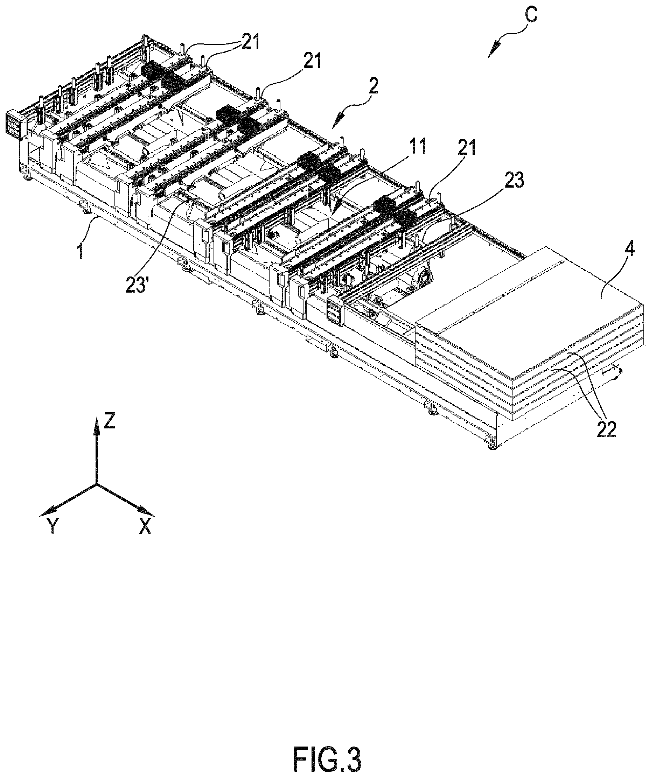

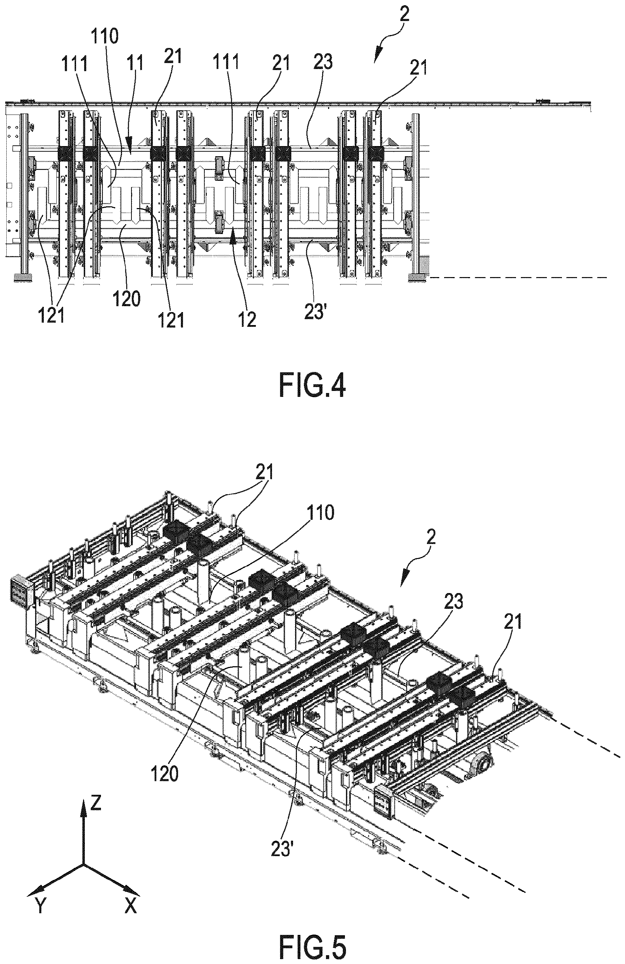

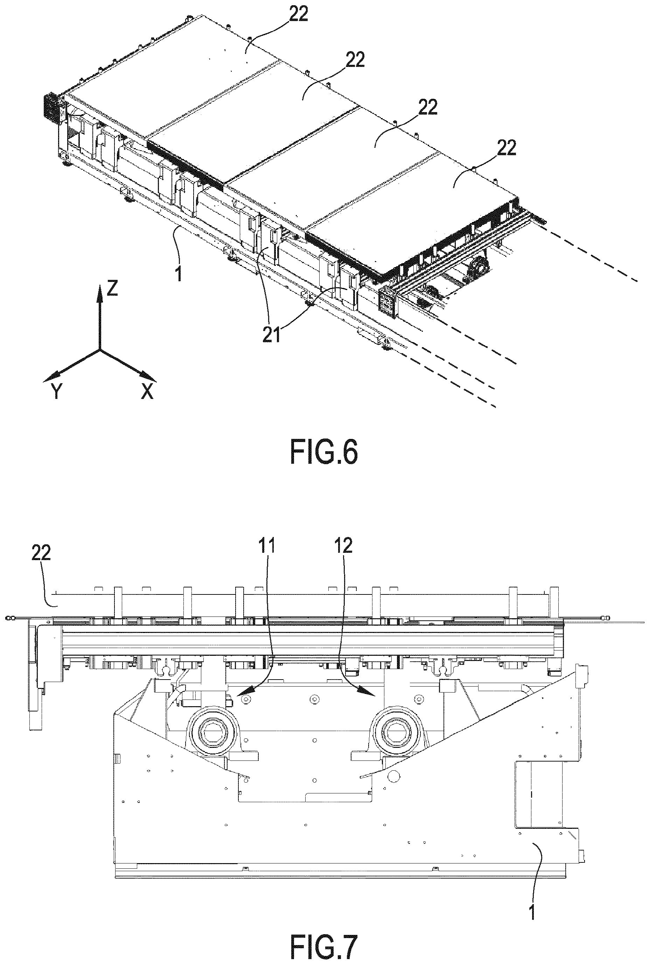

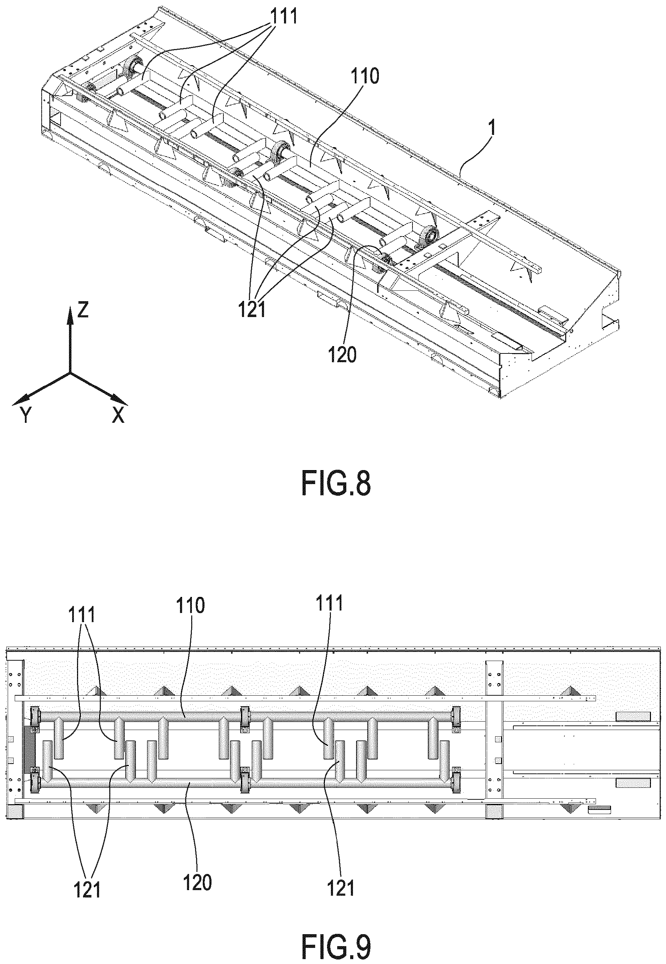

Referring now to figures 3-10, in a first embodiment of the present invention, said machining center C comprises a plurality of multifunction plane modules 22 and a magazine 4.

Said magazine 4 is located at one end of said base 1 and houses said plurality of multifunction plane modules 22, each module being stacked one on top of the other in a direction parallel to a vertical axis indicated by Z.

Said working center C also comprises supporting means 11, 12 for said plurality of multifunction plane modules 22 and moving means, coupled with said working unit 3 (not shown in the figures), of said plurality of multifunction plane modules 22.

More specifically, said supporting means 11, 12 comprise at least one first 110 and one second 120 elongated tubular element according to the X axis, which support respectively a first plurality of supporting elements 111 and a second plurality of supporting elements 121, preferably cylindrically-shaped.

Said at least one first 110 and one second 120 elongated tubular element are rotatably hinged to said base 1 and are movable from a resting position to an operating position.

In said rest position, each one of said supporting elements of said first 111 and second 121 plurality of supporting elements is arranged horizontally, then aligned according to the Y axis and side-by-side to the following element.

In said operating position, each one of said supporting elements of said first 111 and second 121 plurality of supporting elements is arranged vertically, then according to the Z axis, to receive and support said multifunction plane module 22.

Moreover, in said operating position, said supporting elements of said first 111 and second 121 plurality of supporting elements form a supporting surface, substantially flat and raised with respect to that formed by said plurality of supporting bars 21, since said supporting elements of said first 111 and second 121 plurality of supporting elements arise with respect to said plurality of supporting bars 21, according to the Z axis.

Said moving means are integrated in said working unit 3 and are capable of taking each module of said plurality of multifunction plane module 22 from said magazine 4 and positioning it on said first 111 and second 112 plurality of supporting elements, when said at least one first 110 and second 120 elongated tubular element are in said operating position.

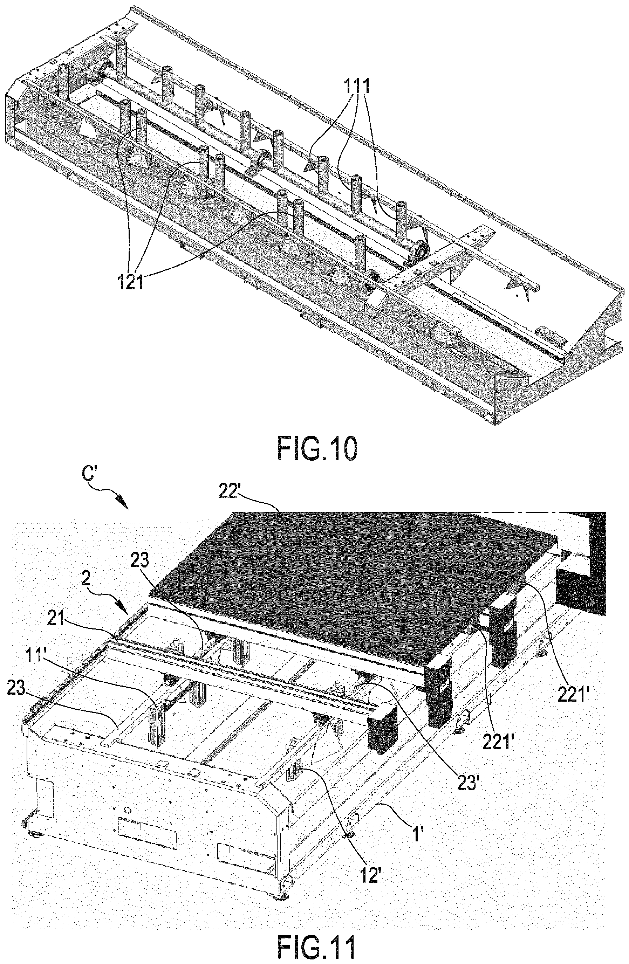

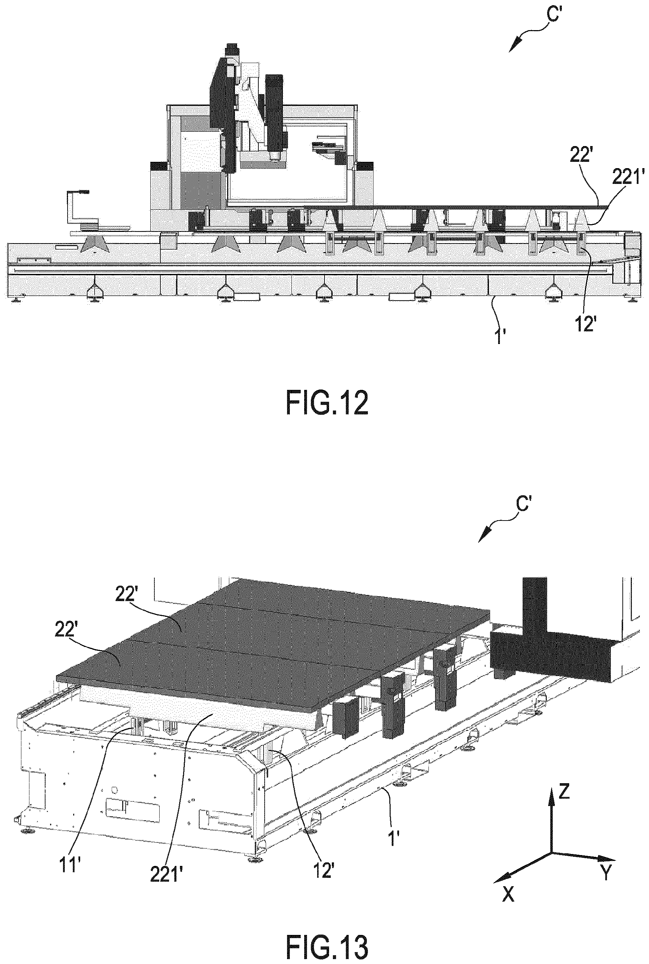

Referring now to figures 11-13, in a second embodiment of the present invention, said working center C' comprises a base 1', a work plane 2 which a plurality of supporting bars 21 is coupled to, by a first 23 and a second 23' guide, a working surface 3 equipped with moving means (not shown in the figure), a magazine 4 and a plurality of multifunction plane module 22'.

Said base 1' comprises supporting means 11', 12'.

Said supporting means 11' and 12' comprise respectively a first plurality of supporting means 11' and a second plurality of supporting means 12' fixed to said base 1'.

In particular, said first plurality of supporting means 11' forms a parallel line to that formed by said second plurality of supporting means 12' and said parallel lines form a supporting surface, substantially flat. Each supporting means of said first plurality of supporting means 11' faces the respective supporting means of said second plurality of supporting means 12', so as to form a pair of supporting means.

Said plurality of multifunction plane modules 22' is provided with a plurality of elongated pedestals 221', whose main dimension is parallel to the Y axis.

Said plurality of elongated pedestals 221' is arranged on the lower face of said plurality of multifunction plane modules 22', in particular, each module of said plurality of multifunction plane modules 22' is provided with at least one elongated pedestal 221'.

When said moving means move said plurality of multifunction plane modules 22' from said magazine 4, each elongated pedestal of said plurality of elongated pedestals 221' arranges on a respective pair of supporting means.

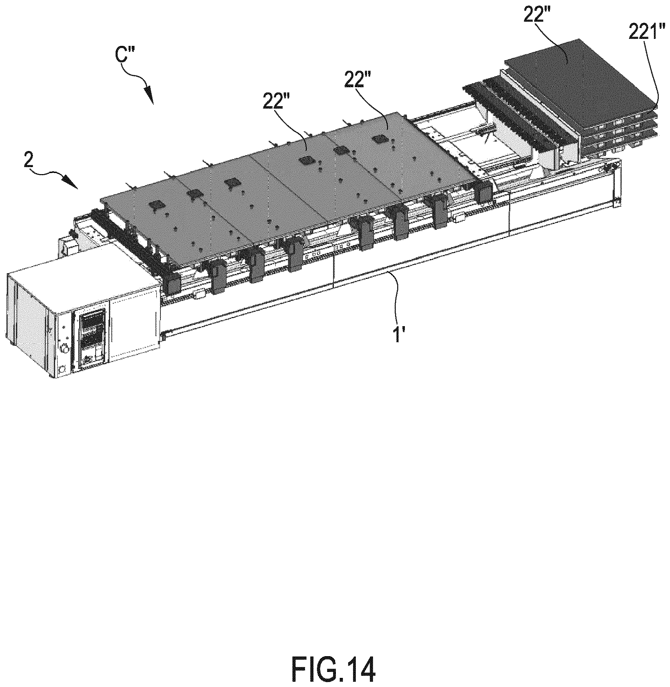

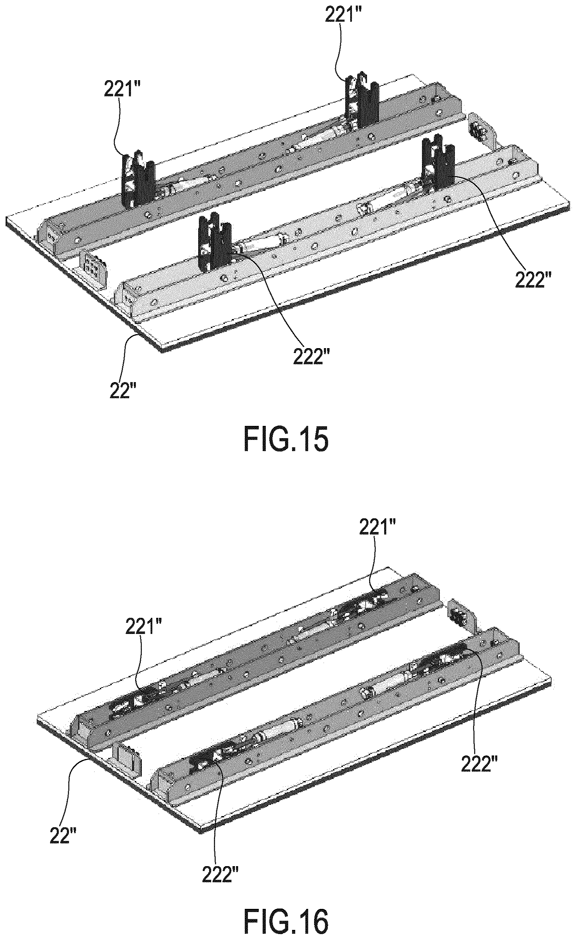

Referring now to figures 14-16, in a third embodiment of the present invention, said working center C" comprises a base 1', a working plane 2 to which a plurality of supporting bars 21 is coupled, by means of a first 23 and a second 23' guide, a working surface 3 equipped with moving means (not shown in the figure), a magazine 4 and a plurality of multifunction plane module 22".

Moreover, each module of the said plurality of modules 22" is provided on the lower surface with a first pair of 221" and a second pair 222" of mobile pedestals.

Said first pair 221" and second pair 222" of mobile pedestals move from a resting position, in which they lie horizontally, aligned in contact with the lower surface of each module of said plurality of modules 22", to an operating position, in which they are arranged vertically, according to the Z axis, so as to be placed in contact with said supporting means 11' and 12' of said base 1'.

This plurality of multifunction plane modules 22' is stored in said magazine 4.

In this position, said first 221" and second 222" pair of mobile pedestals is in said resting position; when instead each module of said plurality of multifunction plane modules 22" is taken by said moving means, said first 221" and second 222" pair of mobile pedestals pass in said operating position to lean on said first 23 and second 23' guide, which in said embodiment are supporting means.

In fact, in said third embodiment, said first 23' and second 23' guide are supporting means that form a substantially flat supporting surface.

The passage from said horizontal rest position to the said vertical operating position takes place by means of actuating means such as hydraulic, pneumatic, electric or similar pistons, not shown in the figure.

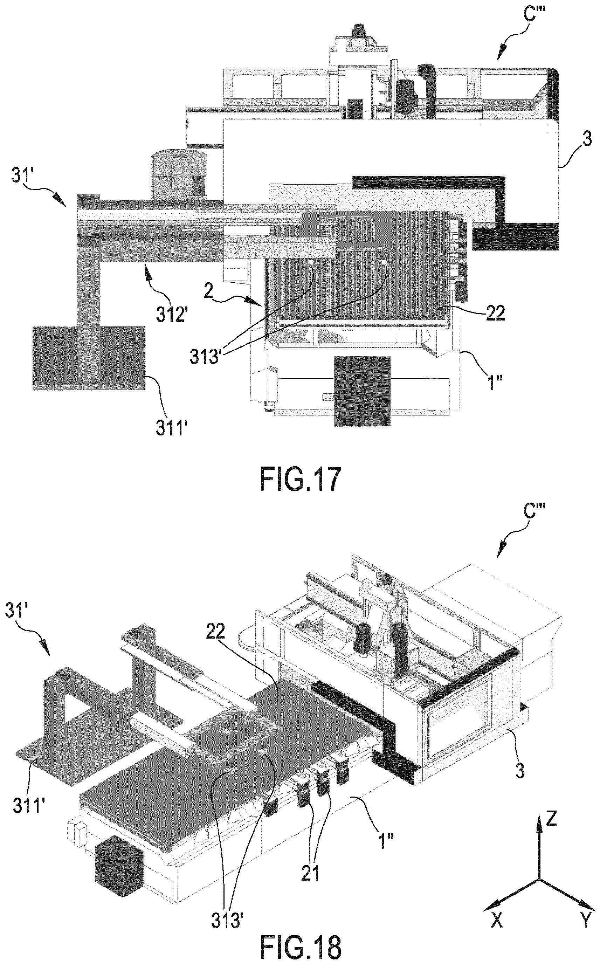

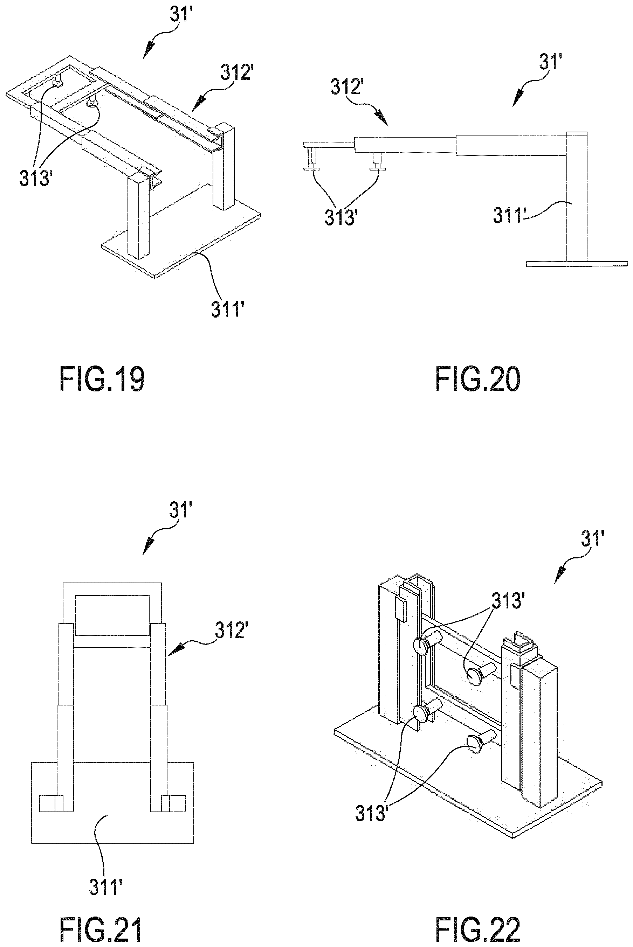

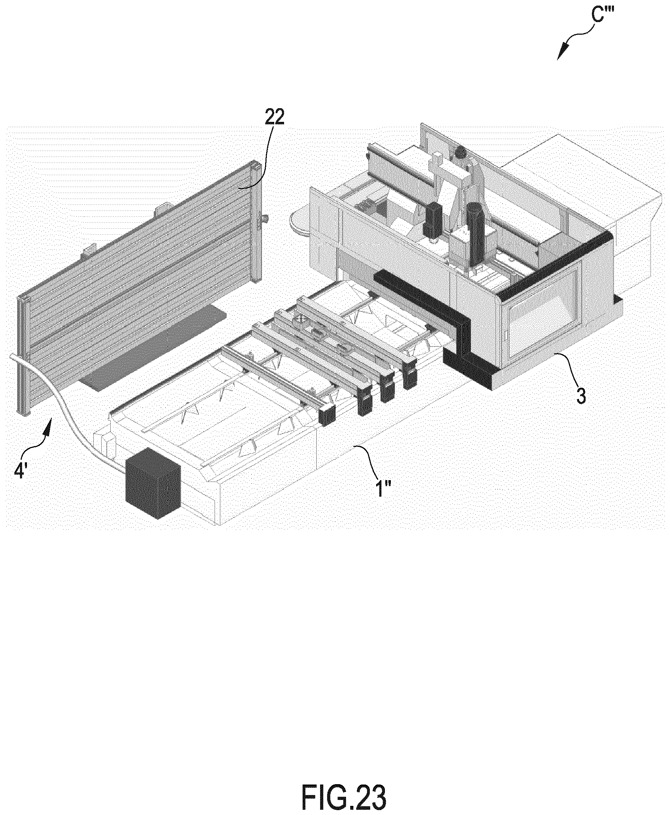

Referring now to figures 17-23, in a fourth embodiment, said working center C" comprises a base 1", a working plane 2, which a plurality of supporting bars 21 is coupled to, by means of a first 23' and a second 23' guide, a working unit 3' equipped with moving means 31' and a multifunction plane module 22.

Said moving means 31' comprise a fixed portion 311', which mainly develops along the Z axis, for the support on the ground of said moving means 31', and a mobile portion 312', rotatably hinged to said fixed portion 311'.

Said mobile portion 312' is telescopic and is adapted for picking up and moving said multifunction plane module 22, by means of gripping devices 313'.

Said mobile portion 312' passes from a resting position, in which it is retracted within said fixed portion 311', to a maximum extension position, in which it is arranged in a direction parallel to the Z axis, so as to receive the multifunction plane module 22, to an operating position in which it is arranged in a direction parallel to the Y axis, so as to support said multifunction plane module 22 on supporting means that, in said fourth embodiment, can be any one of the supporting means 11-12, 11'-12', 23-23' described above.

The working center C'" is equipped with a magazine 4" arranged adjacent to the base 1", on the ground or suspended by means of gripping members 313'.

Said moving means 31' can also be an anthropomorphic robot or a Cartesian robot or a polar robot or a SCARA (Selective Compliance Assembly Robot Arm) robot.

Without departing from the scope of protection of the present invention, it is possible to foresee different combinations of the different supporting means 11-12, 11'-12', 23-23' described above, with different moving means 31' described above, and with the different multifunction plane modules 22, 22', 22" described above, in order to obtain further embodiments of the working center.

The operation of the first embodiment of the working center C described above is as follows.

When it is necessary to machine a workpiece that requires that the working plane 2 comprises said plurality of multifunction plane module 22, said first 110 and second 120 elongated tubular elements pass from said rest position to said operating position, so that said first 111 and second 121 plurality of supporting elements are arranged to receive said plurality of multifunction plane module 22.

Said moving means move along the X axis along said base 1, in order to take each module of said plurality of multifunction plane module 22 from said base 4 and place it on said first 111 and second 112 plurality of supporting elements, one at a time, until they reach the length of the multifunction plane required to carry out the machining, so that all the modules of said plurality of multifunction plane module 22 are all coplanar to form a single working plane.

The operation of the second embodiment of the working center C' and of the third embodiment of the working center C" is substantially unchanged with respect to the operation described above.

In particular, the difference between the operation of the second embodiment of the working center C' and the first embodiment of the working center C is that said first 11' and second 12' plurality of supporting means are fixed and arranged oriented according to the axis Z.

Therefore, when said moving means release each module of said plurality multifunction plane modules 22', each elongated pedestal of said plurality of elongated pedestals 221' is arranged on a respective pair of supporting elements.

The difference in the operation of the third embodiment of the working center C" compared to the first embodiment of the working center C is that said first 221" and second 222" pair of mobile pedestals passes from said resting position, when said plurality of multifunction plane modules 22" is arranged in said magazine 4, to said operating position, when each module of said plurality of multifunction plane module 22" is taken one at a time by said moving means, to arrange in contact with said first 23 and second 23' guide that are supporting means of said plurality of multifunction plane modules on said base 1'.

The operation of said fourth embodiment of said working center C'" is the following.

Initially said mobile portion 312' of said moving means 31' is in said resting position, retracted within said fixed portion 311'.

Then, said mobile portion 312' passes to said maximum extension position, to receive said multifunction plane module 22, in particular said gripping members 313' take said multifunction plane module 22 from said magazine 4'.

Finally, said mobile portion 312' is arranged in said operating position to place said multifunction plane module 22 on one of the supporting means described above 11-12, 11'-12', 23-23'.

As is apparent from the above description, said working center C allows to quickly equip the working plane 2 with multifunction plane modules according to the different machining needs to be carried out on a workpiece.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Working center (C, C', C", C'"), for workpieces made in wood, ceramic, plastic, metal, glass, fiberglass and the like, comprising:
a base (1, 1', 1") for standing on the ground;
at least one multifunction plane module (22, 22', 22") which can be positioned in a working position;
moving means (31') for moving said at least one multifunction plane module (22, 22', 22") from a rest position to said working position;
supporting means (11-12, 11'-12', 23-23'), coupled to said base (1, 1', 1"), for supporting said at least one multifunction plane module (22, 22', 22") for working said workpieces;
a working unit (3) movable along said base (1, 1', 1");
said working center (C, C', C", C'") being **characterized by** a working plane (2) coupled to said base (1, 1', 1") comprising a plurality of supporting bars (21) for supporting said workpieces; and wherein said at least one multifunction plane module (22, 22', 22") can be positioned in said working position over said plurality of supporting bars (21).

2. Working center (C, C', C", C'") according to the preceding claim, **characterized in that** said supporting means (11-12, 11-12', 23-23') form a substantially flat supporting surface to support said at least one multifunction plane module (22, 22', 22").

3. Working center (C, C', C", C'") according to any one of the preceding claim, **characterized in that** it comprises a magazine (4, 4') for housing said at least one multifunction plane module (22, 22', 22") in said rest position.

4. Working center (C, C', C") according to the preceding claim, **characterized**
**in that** said magazine (4) is arranged in correspondence of one end of said base (1, 1'), and
**in that** it comprises a plurality of multifunction plane module (22, 22', 22") arranged in said magazine (4).

5. Working center (C'") according to the preceding claim 3, **characterized in that** said magazine (4) is arranged in correspondence of one end of said base (1"), or it is arranged adjacent to said base (1") on the ground, or it is arranged suspended by said moving means (31').

6. Working center (C, C', C", C'") according to any one of the preceding claim, **characterized in that** said moving means (31') pick up said at least one multifunction plane module (22, 22', 22") from said rest position to put it on said supporting means (11-12, 11'-12', 23-23'), so as to form a continuous multifunction working plane.

7. Working center (C) according to any one of the preceding claim, **characterized in that** said supporting means (11-12) comprise at least one first (110) and one second (120) elongated tubular element, each being hinged in rotation to said base (1) and movable from a rest position to a working position.

8. Working center (C) according to the preceding claim, **characterized in that** each of said at least one first (110) and one second (120) elongated tubular element is provided respectively with a first plurality of supporting elements (111) and a second plurality of supporting elements (121).

9. Working center (C') according to any one of claims 1-6, **characterized in that** said supporting means (11' - 12') comprise respectively a first plurality (11') and a second plurality (12') of supporting means fixed to said base (1').

10. Working center (C') according to the preceding claim, **characterized**
**in that** said first plurality of supporting means (11') forms a line parallel to that formed by said second plurality of supporting means (12'), and
**in that** each supporting means of said first plurality of supporting means (11') faces the respective supporting means of said second plurality of supporting means (12'), so as to form a couple of supporting means.

11. Working center (C, C', C", C'") according to any one of the preceding claims, **characterized in that** said at least one module of multifunction plane module (22, 22', 22") is provided with at least one element (221', 222") capable to be arranged on said supporting means (11-12, 11'-12', 23- 23').

12. Working center (C') according to any one of the preceding claims, **characterized in that** said at least one multifunction plane module (22') is provided with at least one elongated pedestal (221') capable to be arranged on said supporting means (11'-12').

13. Working center (C") according to any one of claims 1-11, **characterized in that** said at least one multifunction plane module (22") is provided, on the lower surface, with a first couple (221") and a second couple (222") of pedestals movable from a rest position to a working position.

14. Working center (C, C', C", C'") according to any one of the preceding claims, **characterized in that** said supporting means (23 - 23') are a first guide (23) and a second guide (23') coupled to said base (1, 1', 1"), suitable for the sliding of said plurality of supporting bars (21) along said base (1, 1', 1").

15. Working center (C, C', C", C'") according to any one of the preceding claims, **characterized in that** said moving means (31') are integrated in said working unit (3).

16. Working center (C'") according to any one of claims 1-14, **characterized in that** said moving means (31') comprise a fixed portion (311') for resting on the ground of said moving means (31'), and a movable portion (312'), hinged in rotation to said fixed portion (311').

17. Working center (C'") according to the preceding claim, **characterized in that** said movable portion (312') is telescopic and it is provided with gripping members (313') for picking up and moving said at least one multifunction plane module (22).

18. Working center (C'") according to anyone of claims 16 or 17, **characterized in that** said movable portion (312') moves from a rest position, in which it is retracted inside said fixed portion (311'), to a position of maximum extension in which it is arranged according to a vertical direction with respect to the ground, to receive said at least one multifunction plane module (22), to a working position in which it is arranged according to a direction parallel to said base (1") to put said at least one multifunction plane module (22) on said supporting means (11- 12, 11'-12', 23-23').

19. Working center (C, C', C", C'") according to anyone of the preceding claims 1-15, **characterized in that** said moving means (31') are an anthropomorphic robot or a Cartesian robot or a polar robot or a SCARA robot - Selective Compliance Assembly Robot Arm.

## Patentansprüche

1. Bearbeitungszentrum (C, C', C", C"'), für Werkstücke aus Holz, Keramik, Kunststoff, Metall, Glas, Fiberglas und dergleichen, bestehend aus:
einer Basis (1, 1', 1") zum Aufstellen auf dem Boden;
mindestens ein in Arbeitsstellung positionierbares Multifunktions-Ebenenmodul (22, 22', 22");
Bewegungsmittel (31') zum Bewegen des mindestens einen Multifunktions-Ebenenmoduls (22, 22', 22") von einer Ruheposition in die Arbeitsposition;
Stützmittel (11-12, 11'-12', 23-23'), die mit der Basis (1, 1', 1") gekoppelt sind, zum Stützen besagte mindestens einen Multifunktions- Ebenenmodul (22, 22', 22") zum Bearbeiten der Werkstücke;
eine Arbeitseinheit (3), die entlang der Basis (1, 1', 1") bewegbar ist;
wobei das Bearbeitungszentrum (C, C', C", C"') **gekennzeichnet ist durch** eine Arbeitsebene (2), die mit der Basis (1, 1', 1") gekoppelt ist, die eine Vielzahl von Stützstangen (21) zum Stützen der Werkstücke umfasst; und wobei die mindestens ein Multifunktions-Ebenenmodul (22, 22', 22") in der Arbeitsposition über den mehreren Tragstangen (21) positionierbar ist.

2. Bearbeitungszentrum (C, C', C", C"') nach dem vorhergehenden Anspruch, **dadurch gekennzeichnet, dass** die Stützmittel (11-12, 11'-12', 23-23') eine im Wesentlichen ebene Stützfläche bilden, um Unterstützung sagte mindestens einer Multifunktions-Flugzeugmodul (22, 22', 22").

3. Bearbeitungszentrum (C, C', C", C"') nach einem der vorstehenden Ansprüche, **dadurch gekennzeichnet, dass** es ein Magazin (4, 4') zum Aufnehmen des mindestens einen Multifunktions-Ebenenmoduls (22, 22 ', 22") in dieser Ruheposition umfasst.

4. Bearbeitungszentrum (C, C', C") nach dem vorstehenden Anspruch, **dadurch gekennzeichnet, dass**
das Magazin (4) in Übereinstimmung mit einem Ende der Basis (1, 1,) angeordnet ist, und, dass
es mehrere Multifunktions-Ebenenmodule (22, 22', 22") umfasst, die in dem Magazin (4) angeordnet sind.

5. Bearbeitungszentrum (C"') nach dem vorstehenden Anspruch 3, **dadurch gekennzeichnet, dass** das Magazin (4) in Übereinstimmung mit einem Ende der Basis (1") angeordnet ist oder benachbart zu der Basis (1") am Boden angeordnet, oder es ist hängend von der Bewegungseinrichtung (31') angeordnet.

6. Bearbeitungszentrum (C, C', C", C"') nach einem der vorstehenden Ansprüche, **dadurch gekennzeichnet, dass** die Bewegungsmittel (31') das mindestens eine Multifunktions-Ebenenmodul (22, 22', 22") von der Ruheposition aus aufnehmen, um es auf die Stützmittel (11-12, 11'-12', 23-23') zu legen, um eine kontinuierliche Multifunktions-Arbeitsebene zu bilden.

7. Bearbeitungszentrum (C) nach einem der vorstehenden Ansprüche, **dadurch gekennzeichnet, dass** die Stützmittel (11-12) mindestens ein erstes (110) und ein zweites (120) langgestrecktes rohrförmiges Element umfassen, die jeweils drehbar an der Basis (1) angelenkt und von einer Ruheposition in eine Arbeitsposition bewegbar sind.

8. Bearbeitungszentrum (C) nach dem vorstehenden Anspruch, **dadurch gekennzeichnet, dass** jedes des mindestens einen ersten (110) und eines zweiten (120) langgestreckten rohrförmigen Elements jeweils mit einer ersten Vielzahl von Stützelementen (111) und einer zweiten Vielzahl von Stützelementen (121) versehen ist.

9. Bearbeitungszentrum (C') nach einem der Ansprüche 1-6, **dadurch gekennzeichnet, dass** die Stützmittel (11'-12') jeweils eine erste Vielzahl (11') und eine zweite Vielzahl (12') von Stützmitteln umfassen, die an der Basis (1') befestigt sind.

10. Bearbeitungszentrum (C') nach dem vorstehenden Anspruch, **dadurch gekennzeichnet, dass**
die erste Vielzahl von Stützmitteln (11 ') eine Linie parallel zu der von der zweiten Vielzahl von Stützmitteln (12') gebildeten Linie bildet. und dass
jedes Stützmittel der ersten Vielzahl von Stützmitteln (11 ') den jeweiligen Stützmitteln der zweiten Vielzahl von Stützmitteln (12') gegenüberliegt, um ein Paar Stützmittel zu bilden.

11. Bearbeitungszentrum (C, C', C", C'") nach einem der vorstehenden Ansprüche, **dadurch gekennzeichnet, dass** das mindestens eine Modul des Multifunktions-Ebenenmoduls (22, 22', 22") mit mindestens einem Element (221 ', 222") auf den besagten Stützmitteln arrangiert werden kann (11-12, 11'-12', 23-23').

12. Bearbeitungszentrum (C') nach einem der vorstehenden Ansprüche, **dadurch gekennzeichnet, dass** das mindestens eine Multifunktions-Ebenenmodul (22') mit mindestens einem langgestreckten Sockel (221') versehen ist, der auf den besagten Stützmitteln arrangiert werden kann (11'-12').

13. Bearbeitungszentrum (C") nach einem der Ansprüche 1-11, **dadurch gekennzeichnet, dass** das mindestens eine Multifunktions-Ebenenmodul (22") an der unteren Oberfläche mit einem ersten Paar (221") und einem zweiten Paar (222") von Sockeln versehen ist, die von einer Ruheposition in eine Arbeitsposition bewegbar sind.

14. Bearbeitungszentrum (C, C', C", C'") nach einem der vorhergehenden Ansprüche, **dadurch gekennzeichnet, dass** die Stützmittel (23-23') eine erste Führung (23) und eine zweite Führung (23') sind, die an die Basis (1, 1 ', 1") gekoppelt
und zum Gleiten der Vielzahl von Stützstangen (21) entlang der Basis (1, 1', 1") geeignet sind.

15. Bearbeitungszentrum (C, C', C", C'") nach einem der vorstehenden Ansprüche, **dadurch gekennzeichnet, dass** die Bewegungsmittel (31') in die Arbeitseinheit (3) integriert sind.

16. Bearbeitungszentrum (C'") nach einem der Ansprüche 1-14, **dadurch gekennzeichnet, dass** die Bewegungsmittel (31') einen festen Abschnitt (311') zum Aufliegen auf dem Boden der Bewegungsmittel (31') umfassen, und einen beweglichen Abschnitt (312'), der drehbar an dem festen Abschnitt (311') angelenkt ist.

17. Bearbeitungszentrum (C"') nach dem vorstehenden Anspruch, **dadurch gekennzeichnet, dass** der bewegliche Abschnitt (312') teleskopisch ist und mit Greifelementen (313') zum Aufnehmen und Bewegen des mindestens einen Multifunktions-Ebenenmoduls (22) versehen ist.

18. Bearbeitungszentrum (C'") nach einem der Ansprüche 16 oder 17, **dadurch gekennzeichnet, dass** sich der bewegliche Abschnitt (312') aus einer Ruheposition bewegt, in dem er innerhalb des festen Abschnitts (311') in eine Position maximaler Ausdehnung zurückgezogen wird, in der er gemäß einer vertikalen Richtung in Bezug auf den Boden angeordnet ist, um das mindestens eine Multifunktions-Ebenenmodul (22) aufzunehmen und in eine Arbeitspositionzu bringen, in der es gemäß einer Richtung parallel zu der Basis (1") angeordnet ist, um das mindestens eine Multifunktions-Ebenenmodul (22) auf die besagten Stützmittel zu legen (11-12, 11'-12', 23-23').

19. Bearbeitungszentrum (C, C', C", C'") nach einem der vorstehenden Ansprüche 1-15, **dadurch gekennzeichnet, dass** die Bewegungsmittel (31') ein anthropomorpher Roboter oder ein kartesischer Roboter oder ein polarer Roboter oder ein SCARA-Roboter (Selective Compliance Assembly Robot Arm) sind.

## Revendications

1. Centre d'usinage (C, C', C", C'"), pour des pièces en bois, céramique, plastique, métal, verre, fibre de verre et similaires, comprenant :
un bâti (1, 1', 1") pour l'appui au sol ;
au moins un module de plan multifonction (22, 22', 22") qui peut être positionné dans une position de travail ;
des moyens de déplacement (31') pour déplacer ledit au moins un module de plan multifonction (22, 22', 22") d'une position de repos à ladite position de travail ;
des moyens de support (11-12, 11'-12', 23-23'), couplés audit bâti (1, 1', 1"), pour supporter ledit au moins un module de plan
multifonction (22, 22', 22") pour l'usinage desdites pièces ;
une unité d'usinage (3) mobile le long dudit bâti (1, 1', 1");
ledit centre d'usinage (C, C', C", C"') étant **caractérisé par** un plan de travail (2) couplé audit bâti (1, 1', 1") comprenant une pluralité de barres de support (21) pour supporter lesdites pièces ; et dans lequel ledit au moins un module de plan multifonction (22, 22', 22") peut être positionné dans ladite position de travail au-dessus de ladite pluralité de barres de support (21).

2. Centre d'usinage (C, C', C", C"') selon la revendication précédente, **caractérisé en ce que** lesdits moyens de support (11-12, 11'-12', 23-23') forment une surface d'appui essentiellement plate pour supporter ledit au moins un module de plan multifonction (22, 22', 22").

3. Centre d'usinage (C, C', C", C"') selon l'une quelconque des revendications précédentes, **caractérisé en ce qu'**il comprend un magasin (4, 4') pour loger ledit au moins un module de plan multifonction (22, 22', 22") dans ladite position de repos.

4. Centre d'usinage (C, C', C") selon la revendication précédente, **caractérisé en ce que** ledit magasin (4) est disposé au niveau d'une extrémité dudit bâti (1, 1'), et **en ce qu'**il comprend une pluralité de modules de plan multifonction (22, 22', 22") disposée dans ledit magasin (4).

5. Centre d'usinage (C"') selon la revendication précédente 3, **caractérisé en ce que** ledit magasin (4) est disposé au niveau d'une extrémité dudit bâti (1"), ou il est disposé adjacent audit bâti (1") sur le sol, ou il est disposé suspendu par lesdits moyens de déplacement (31').

6. Centre d'usinage (C, C', C", C'") selon l'une quelconque des revendications précédentes, **caractérisé en ce que** lesdits moyens de déplacement (31') prélèvent ledit au moins un module de plan multifonction (22, 22', 22 ") de ladite position de repos pour le placer sur lesdits moyens de support (11-12, 11'-12', 23-23'), de manière à former un plan de travail multifonction continu.

7. Centre d'usinage (C) selon l'une quelconque des revendications précédentes, **caractérisé en ce que** lesdits moyens de support (11-12) comprennent au moins un premier (110) et un deuxième (120) élément tubulaire allongé, chacun étant articulé en rotation audit bâti (1) et mobile d'une position de repos à une position de travail.

8. Centre d'usinage (C) selon la revendication précédente, **caractérisé en ce que** chacun desdits au moins un premier (110) et un deuxième (120) élément tubulaire allongé est pourvu respectivement d'une première pluralité d'éléments de support (111) et d'une deuxième pluralité d'éléments de support (121).

9. Centre d'usinage (C') selon l'une quelconque des revendications 1-6, **caractérisé en ce que** lesdits moyens de support (11' - 12') comprennent respectivement une première pluralité (11') et une deuxième pluralité (12') de moyens de support fixés audit bâti (1').

10. Centre d'usinage (C') selon la revendication précédente, **caractérisé**
**en ce que** ladite première pluralité de moyens de support (11') forme une ligne parallèle à celle formée par ladite deuxième pluralité de moyens de support (12'), et
**en ce que** chaque moyen de support de ladite première pluralité de moyens de support (11') fait face au moyen de support respectif de ladite deuxième pluralité de moyens de support (12'), de manière à former une paire de moyens de support.

11. Centre d'usinage (C, C', C", C'") selon l'une quelconque des revendications précédentes, **caractérisé en ce que** ledit au moins un module de plan multifonction (22, 22', 22") est pourvu d'au moins un élément (221', 222") destiné à être disposé sur lesdits moyens de support (11-12, 11'-12', 23-23').

12. Centre d'usinage (C') selon l'une quelconque des revendications précédentes, **caractérisé en ce que** ledit au moins un module de plan multifonction (22') est pourvu d'au moins un piédestal allongé (221') destiné à être disposé sur lesdits moyens de support (11'-12').

13. Centre d'usinage (C") selon l'une quelconque des revendications 1-11, **caractérisé en ce que** ledit au moins un module de plan multifonction (22") est pourvu, sur la surface inférieure, d'une première paire (221") et d'une deuxième paire (222") de piédestaux mobiles d'une position de repos à une position de travail.

14. Centre d'usinage (C, C', C", C'") selon l'une quelconque des revendications précédentes, **caractérisé en ce que** lesdits moyens de support (23-23') sont un premier guide (23) et un deuxième guide (23') couplés audit bâti (1, 1', 1"),
adaptés au coulissement de ladite pluralité de barres de support (21) le long dudit bâti (1, 1', 1").

15. Centre d'usinage (C, C', C", C'") selon l'une quelconque des revendications précédentes, **caractérisé en ce que** lesdits moyens de déplacement (31') sont intégrés dans ladite unité d'usinage (3).

16. Centre d'usinage (C'") selon l'une quelconque des revendications 1-14, **caractérisé en ce que** lesdits moyens de déplacement (31') comprennent une portion fixe (311') pour l'appui au sol desdits moyens de déplacement (31'), et une portion mobile (312'), articulée en rotation à ladite portion fixe (311').

17. Centre d'usinage (C"') selon la revendication précédente, **caractérisé en ce que** ladite portion mobile (312') est télescopique et est munie d'organes de prise (313') pour prélever et déplacer ledit au moins un module de plan multifonction (22).

18. Centre d'usinage (C"') selon l'une quelconque des revendications 16 ou 17, **caractérisé en ce que** ladite portion mobile (312') se déplace d'une position de repos, dans laquelle elle est rentrée à l'intérieur de ladite portion fixe (311'), à une position d'extension maximale dans laquelle elle est disposée selon une direction verticale par rapport au sol, pour recevoir ledit au moins un module de plan multifonction (22), à une position de travail dans laquelle elle est disposée selon une direction parallèle audit bâti (1") pour placer ledit au moins un module de plan multifonction (22) sur lesdits moyens de support (11-12, 11'-12', 23-23').

19. Centre d'usinage (C, C', C", C'") selon l'une quelconque des revendications précédentes 1-15, **caractérisé en ce que** lesdits moyens de déplacement (31') sont un robot anthropomorphe ou un robot cartésien ou un robot polaire ou un robot SCARA - Selective Compliance Assembly Robot Arm.
